# EUROPEAN PATENT SPECIFICATION

(11) **EP 3 923 393 B1**
(45) Date of publication and mention of the grant of the patent: **21.05.2025**
(21) Application number: 19940410.4
(22) Date of filing: 06.08.2019
(51) Int. Cl.: H01M 10/04, H01M 10/0583, H01M 10/052

(54) **METHOD FOR MANUFACTURING FOLDING ELECTRIC CORE OF ELECTRODE COMPOSITE UNIT**
VERFAHREN ZUR HERSTELLUNG EINES ELEKTRISCHEN FALTKERNS EINER ELEKTRODENVERBUNDEINHEIT
PROCÉDÉ DE FABRICATION DE NOYAU ÉLECTRIQUE PLIABLE D'UNITÉ COMPOSITE D'ÉLECTRODE

(43) Date of publication of application: 15.12.2021
(73) Proprietor: Dongguan Chaohong Automation Equipment Co., Ltd, Dongguan, Guangdong 523000 (CN)
(72) Inventor: DUAN, Lei, Dongguan, Guangdong 523000 (CN); XU, Jinlong, Dongguan, Guangdong 523000 (CN); TAN, Huaming, Dongguan, Guangdong 523000 (CN)
(74) Representative: Meyer, Thorsten
(86) International application number: PCT/CN2019/099463
(87) International publication number: WO 2021/022482

(56) References cited:
- EP-A1- 3 396 766
- CN-A- 1 848 507
- CN-U- 207 781 806
- CN-U- 208 622 872
- KR-A- 20160 020 204
- US-A1- 2011 305 938
- US-A1- 2011 305 938

## Description

### FIELD OF THE INVENTION

The present invention relates to a method of manufacturing an electric core of battery, in particular to a method for manufacturing a folding electric core of an electrode composite unit.

### BACKGROUND OF THE INVENTION

With the rapid development of society, lithium batteries are used in many products such as electric bicycles and notebook computers due to the advantages of light weight, high energy storage density, long service life, low self-discharge and environmental protection.

As we all know, an electric core of the existing lithium battery is mainly formed by stacking the negative electrode plate and the positive electrode plate at intervals, and a separator is arranged between the negative electrode plate and the positive electrode plate, and the topmost electrode layer and the bottommost electrode layer of the electric core are all negative electrode plates.

The existing method for manufacturing the electric core of the lithium battery is mainly to first lay a separator on the platform, then place a negative electrode plate on the separator, then place another separator on the negative electrode plate, and then place a positive electrode plate on the separator, ..., a complete electric core of battery is made by repeatedly placing the separator, the negative electrode plate and the positive electrode plate for multiple times. However, the existing manufacturing method of the lithium electric core of battery has the following defects: (1) the separator, the negative electrode plate and the positive electrode plate must be cut separately before stacking, which leads to complicated production steps; (2) during the production of lithium electric core of battery, it is necessary to stack the separator, the negative electrode plate, and the positive electrode plate in a certain order, which results in low production efficiency. Patent application US 2011/0305938A1 discusses an electrode layered product and the manufacturing method, multiple plates for a cell are stacked together, and bent in a zigzag manner to form the product. Patent application KR20160020204A discusses a stack-folding type electrode assembly to reduce the number of times of folding, multiple unit cells including their respective cell structure are made in advance, and then are arranged in the folding separator sheet, and then are folded in a zig-zag alternatively. Patent application EP3396766A1 discusses an electrode assembly and a manufacturing method which is capable of improving an alignment of a secondary battery.

Therefore, there is an urgent need for providing a method for manufacturing a folding electric core of an electrode composite unit that simplifies the production process and improves the production efficiency to overcome the above-mentioned drawbacks.

### SUMMARY OF THE INVENTION

An objective of the present invention is to provide a method for manufacturing folding electric core of electrode composite unit, which simplifies production process and improves production efficiency.

To achieve the above objective, the present invention provides a method for manufacturing folding electric core of electrode composite unit, which includes: step a, providing a strip-shaped electrode composite unit, the electrode composite unit comprising multiple electrode layers, a separator layer being provided between two adjacent electrode layers having opposite polarities, a top electrode layer located on a top of the electrode composite unit comprising multiple top electrode units arranged in a row, a bottom electrode layer located on a bottom of the electrode composite unit comprising multiple bottom electrode units arranged in a row, a blank region greater than or equal to a length of one electrode unit being formed between two adjacent top electrode units, a blank region greater than or equal to a length of one electrode unit being formed between two adjacent bottom electrode units, and a blank region greater than or equal to a length of one electrode unit being formed on at least the top electrode layer and the bottom electrode layer at a head end and/or a tail end of the electrode composite unit; and step b, folding the head end of the electrode composite unit up and down alternatively, with the length of one electrode unit as a unit of folding each time, to form an electric core of battery; in the electric core of battery, two adjacent electrode units having opposite polarities, the electrode units at a top and a bottom of the electric core of battery being both negative electrodes and covered by the separator layer, wherein the number of the separator layer is odd, the top electrode layer located on the top of the electrode composite unit and the bottom electrode layer located on the bottom of the electrode composite unit have opposite polarities; the electrode composite unit comprises the top electrode layer, a first separator layer, a first electrode layer, a second separator layer, a second electrode layer, a third separator layer and the bottom electrode layer, from top to bottom; the first electrode layer comprises multiple first electrode units spaced apart from each other and arranged in rows, the second electrode layer comprises multiple second electrode units spaced apart from each other and arranged in rows, the first electrode units are aligned with the second electrode units in a vertical direction, the top electrode units are aligned with the first electrode units, and the bottom electrode units are aligned with the second electrode units.

Preferably, both of the first electrode layer and the second electrode layer are continuous strip-shaped electrodes.

Preferably, the top electrode units are staggered with the bottom electrode units in the vertical direction, and the number of the bottom electrode units is one more than the number of the top electrode units, the top electrode units have positive polarities, and the bottom electrode units have negative polarities.

Preferably, the top electrode units are staggered with the bottom electrode units in the vertical direction, and the number of the bottom electrode units is equal to the number of the top electrode units, the top electrode units have positive polarities, and the bottom electrode units have negative polarities.

Preferably, the number of the bottom electrode units is one more than the number of the top electrode units, each of the top electrode units is aligned with one of the bottom electrode units in the vertical direction, the top electrode units have positive polarities, and the bottom electrode units have negative polarities.

Preferably, the number of the bottom electrode units is equal to the number of the top electrode units, the top electrode units are aligned with the bottom electrode units in the vertical direction, the top electrode units have positive polarities, and the bottom electrode units have negative polarities.

Preferably, a blank region greater than or equal to a length of one electrode unit is formed on the top electrode layer at the head end of the electrode composite unit; a blank region greater than or equal to a length of one electrode unit is formed on the top electrode layer, the first electrode layer, the second electrode layer and the bottom electrode layer at the tail head of the electrode composite unit, respectively.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer at the tail end of the electrode composite unit.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the second electrode layer and the bottom electrode layer at the tail end of the electrode composite unit, respectively.

Preferably, a blank region greater than or equal to a length of one electrode unit is formed on the top electrode layer at the head end of the electrode composite unit; a blank region greater than or equal to a length of one electrode unit is formed on the top electrode layer, the second electrode layer and the bottom electrode layer at the tail end of the electrode composite unit, respectively.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer at the tail end of the electrode composite unit.

Preferably, a blank region greater than or equal to a length of one electrode unit is formed on the top electrode layer and the bottom electrode layer at the head end of the electrode composite unit, respectively; an end section is reversed at the tail end of the electrode composite unit, and a blank region greater than or equal to a length of one electrode unit is formed on the top electrode layer and the bottom electrode layer at one end of the end section, respectively, and a blank region greater than or equal to a length of one electrode unit is formed on the top electrode layer, the second electrode layer and the bottom electrode layer at the other end of the end section.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer, the second electrode layer and the bottom electrode layer at the tail end of the electrode composite unit.

Preferably, the number of the separator layer is even, the top electrode layer located on the top of the electrode composite unit and the bottom electrode layer located on the bottom of the electrode composite unit have same polarities.

Preferably, the electrode composite unit comprises the top electrode layer, a first separator layer, a first electrode layer, a second separator layer, a second electrode layer, a third separator layer, a third electrode layer, a fourth separator layer, and the bottom electrode layer, from top to bottom.

Preferably, the first electrode layer comprises multiple first electrode units spaced apart from each other and arranged in rows, the second electrode layer comprises multiple second electrode units spaced apart from each other and arranged in rows, the third electrode layer comprises multiple third electrode units spaced apart from each other and arranged in rows, the first electrode units, the second electrode units and the third electrode units are aligned with one another in a vertical direction, the top electrode units are aligned with the first electrode units, and the bottom electrode units are aligned with the third electrode units.

Preferably, the first electrode layer, the second electrode layer and the third electrode layer are continuous strip-shaped electrodes.

Preferably, the top electrode units are staggered with the bottom electrode units in the vertical direction, and the top electrode units and the bottom electrode units have positive polarities.

Preferably, the number of the bottom electrode units is one more than the number of the top electrode units, each of the top electrode units is aligned with one of the bottom electrode units in the vertical direction, the top electrode units and the bottom electrode units have positive polarities.

Preferably, the number of the bottom electrode units is equal to the number of the top electrode units, the top electrode units are aligned with the bottom electrode units in the vertical direction, the top electrode units and the bottom electrode units have positive polarities.

Preferably, the number of the bottom electrode units is one more than the number of the top electrode units; a blank region greater than or equal to a length of one electrode unit is formed on the top electrode layer at the head end of the electrode composite unit; and a blank region greater than or equal to a length of one electrode unit is formed on the top electrode layer and the bottom electrode layer at the tail head of the electrode composite unit, respectively.

Preferably, the number of the bottom electrode units is equal to the number of the top electrode units; a blank region greater than or equal to a length of one electrode unit is formed on the top electrode layer at the head end of the electrode composite unit; and a blank region greater than or equal to a length of one electrode unit is formed on the top electrode layer and the bottom electrode layer at the tail end of the electrode composite unit, respectively.

Preferably, a blank region greater than or equal to a length of one electrode unit is formed on the top electrode layer at the head end of the electrode composite unit; a blank region greater than or equal to a length of one electrode unit is formed on the top electrode layer, the second electrode layer, the third electrode layer and the bottom electrode layer at the tail end of the electrode composite unit, respectively.

Preferably, a blank region greater than or equal to a length of one electrode unit is formed on the top electrode layer at the head end of the electrode composite unit; an end section is reversed at the tail end of the electrode composite unit, and a blank region greater than or equal to a length of one electrode unit is formed on the top electrode layer and the bottom electrode layer at one end of the end section, respectively; and a blank region greater than or equal to a length of one electrode unit is formed on the top electrode layer, the third electrode layer and the bottom electrode layer at the other end of the end section.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer at the tail end of the electrode composite unit.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer and the bottom electrode layer at the tail end of the electrode composite unit, respectively.

Preferably, a blank region greater than or equal to a length of one electrode unit is formed on the top electrode layer and the bottom electrode layer at the head end of the electrode composite unit, respectively; a blank region greater than or equal to a length of one electrode unit is formed on the top electrode layer, the second electrode layer, the third electrode layer and the bottom electrode layer at the tail end of the electrode composite unit, respectively.

Preferably, a blank region greater than or equal to a length of one electrode unit is formed on the top electrode layer and the bottom electrode layer at the head end of the electrode composite unit; an end section is reversed at the tail end of the electrode composite unit, respectively; a blank region greater than or equal to a length of one electrode unit is formed on the top electrode layer and the bottom electrode layer at one end of the end section, respectively; and a blank region greater than or equal to a length of one electrode unit is formed on the top electrode layer, the third electrode layer and the bottom electrode layer at the other end of the end section.

In comparison with the prior art, the method for manufacturing folding electric core of electrode composite unit according to the present invention includes step a, providing a strip-shaped electrode composite unit, the electrode composite unit including multiple electrode layers, a separator layer being provided between two adjacent electrode layers having opposite polarities, a top electrode layer including multiple top electrode units arranged in a row, a bottom electrode layer including multiple bottom electrode units arranged in a row, a blank region greater than or equal to a length of one electrode unit being formed between two adjacent top electrode units, a blank region greater than or equal to a length of one electrode unit being formed between two adjacent bottom electrode units, and a blank region greater than or equal to a length of one electrode unit being formed on at least the top electrode layer and the bottom electrode layer at a head end and/or a tail end of the electrode composite unit; and step b, folding the head end of the electrode composite unit up and down alternatively, with the length of one electrode unit as a unit of folding each time, to form an electric core of battery; in the electric core of battery, two adjacent electrode units having opposite polarities, the electrode units at a top and a bottom of the electric core of battery being both negative electrodes and covered by the separator layer. In such a method, the separator layer of the present invention is prevented from being cut into several separator pieces, thereby simplifying the production process. At the same time, the end of the electrode composite unit is folded up and down alternatively, with the length of one electrode unit as a unit of folding each time, to form an electric core of battery, thus avoiding the traditional stacking of the separator layer, the negative electrode layer and the positive electrode layer in a certain order, thereby improving the production efficiency of the battery cell.

### BRIEF DESCRIPTION OF THE DRAWINGS

The accompanying drawings facilitate an understanding of the various embodiments of this invention. In such drawings:
FIG. 1 is a flowchart of a manufacturing method of an electric core according to the present invention;
FIG. 2 is a schematic diagram of an electrode composite unit according to a first embodiment of the present invention;
FIG. 3 is a schematic diagram of an electric core according to a first embodiment of the present invention;
FIG. 4 is a schematic diagram of an electrode composite unit according to a second embodiment of the present invention;
FIG. 5 is a schematic diagram of an electric core according to a second embodiment of the present invention;
FIG. 6 is a schematic diagram of an electrode composite unit according to a third embodiment of the present invention;
FIG. 7 is a schematic diagram of an electric core according to a third embodiment of the present invention;
FIG. 8 is a schematic diagram of an electrode composite unit according to a fourth embodiment of the present invention;
FIG. 9 is a schematic diagram of an electric core according to a fourth embodiment of the present invention;
FIG. 10 is a schematic diagram of an electrode composite unit according to a fifth embodiment of the present invention;
FIG. 11 is a schematic diagram of an electric core according to a fifth embodiment of the present invention;
FIG. 12 is a schematic diagram of an electrode composite unit according to a sixth embodiment of the present invention;
FIG. 13 is a schematic diagram of an electric core according to a sixth embodiment of the present invention;
FIG. 14 is a schematic diagram of an electrode composite unit according to a seventh embodiment of the present invention;
FIG. 15 is a schematic diagram of an electric core according to a seventh embodiment of the present invention;
FIG. 16 is a schematic diagram of an electrode composite unit according to an eighth embodiment of the present invention;
FIG. 17 is a schematic diagram of an electric core according to an eighth embodiment of the present invention;
FIG. 18 is a schematic diagram of an electrode composite unit according to a ninth embodiment of the present invention;
FIG. 19 is a schematic diagram of an electric core according to a ninth embodiment of the present invention;
FIG. 20 is a schematic diagram of an electrode composite unit according to a tenth embodiment of the present invention;
FIG. 21 is a schematic diagram of an electric core according to a tenth embodiment of the present invention;
FIG. 22 is a schematic diagram of an electrode composite unit according to an eleventh embodiment of the present invention;
FIG. 23 is a schematic diagram of an electric core according to an eleventh embodiment of the present invention;
FIG. 24 is a schematic diagram of an electrode composite unit according to a twelfth embodiment of the present invention;
FIG. 25 is a schematic diagram of an electric core according to a twelfth embodiment of the present invention;
FIG. 26 is a schematic diagram of an electrode composite unit according to a thirteenth embodiment of the present invention;
FIG. 27 is a schematic diagram of an electric core according to a thirteenth embodiment of the present invention;
FIG. 28 is a schematic diagram of an electrode composite unit according to a fourteenth embodiment of the present invention;
FIG. 29 is a schematic diagram of an electric core according to a fourteenth embodiment of the present invention;
FIG. 30 is a schematic diagram of an electrode composite unit according to a fifteenth embodiment of the present invention; and
FIG. 31 is a schematic diagram of an electric core according to a fifteenth embodiment of the present invention;

### DETAILED DESCRIPTION OF ILLUSTRATED EMBODIMENTS

In order to explain in detail the technical content, construction features, the purpose and effect achieved by the present invention, the following combined with the implementation and the attached drawings are described in detail.

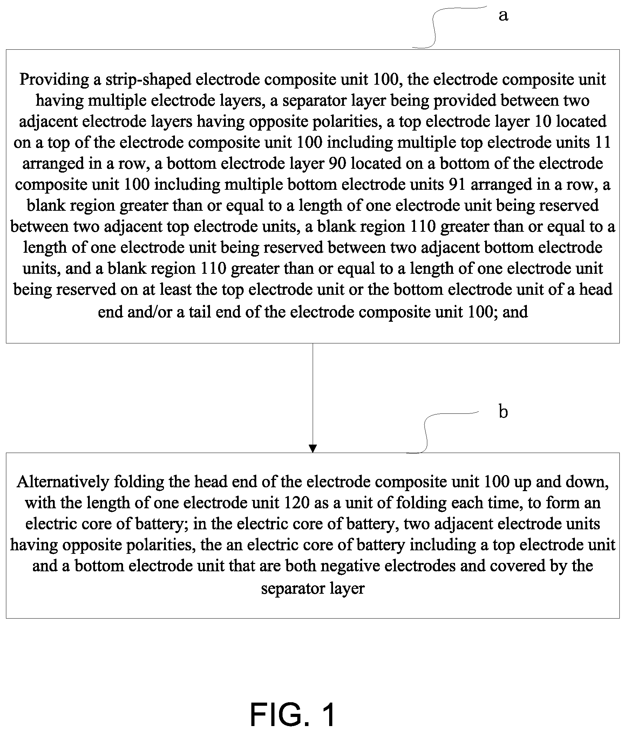

Referring to FIGS. 1-31, a method for manufacturing folding electric core of electrode composite unit includes: steps a, providing a strip-shaped electrode composite unit 100, the electrode composite unit having multiple electrode layers, a separator layer being provided between two adjacent electrode layers having opposite polarities, a top electrode layer 10 located on a top of the electrode composite unit 100 including multiple top electrode units 11 arranged in a row, a bottom electrode layer 90 located on a bottom of the electrode composite unit 100 including multiple bottom electrode units 91 arranged in a row, a blank region greater than or equal to a length of one electrode unit being reserved between two adjacent top electrode units, a blank region 110 greater than or equal to a length of one electrode unit being reserved between two adjacent bottom electrode units, and a blank region 110 greater than or equal to a length of one electrode unit being reserved on at least the top electrode unit or the bottom electrode unit of a head end and/or a tail end of the electrode composite unit 100; and step b, alternatively folding the head end of the electrode composite unit 100 up and down, with the length of one electrode unit 120 as a unit of folding each time, to form an electric core of battery; in the electric core of battery, two adjacent electrode units having opposite polarities, the an electric core of battery including a top electrode unit and a bottom electrode unit that are both negative electrodes and covered by the separator layer.

More specifically, FIGS. 1-15 respectively show a first to eighth embodiment of the present invention is shown. Specifically, the separator layer includes odd layers, the top electrode layer 10 located on the top of the electrode composite unit 100 and the bottom electrode layer 90 located on the bottom of the electrode composite unit 100 have opposite polarities. The electrode composite unit includes the top electrode layer 10, a first separator layer 20, a first electrode layer 30, a second separator layer 40, a second electrode layer 50, a third separator layer 60 and the bottom electrode layer 90, from top to bottom. Specifically, the first electrode layer 30 includes multiple first electrode units 31 spaced apart from each other and arranged in rows, the second electrode layer 50 includes multiple second electrode units 51 spaced apart from each other and arranged in rows, the first electrode units 31 are aligned with the second electrode units 51 in a vertical direction, the top electrode units 11 are aligned with the first electrode units 31, and the bottom electrode units 91 are aligned with the second electrode units 51. It's worth noting that, both of the first electrode layer 30 and the second electrode layer 50 may be continuous strip-shaped electrodes, as configured by people ordinarily skilled in the art.

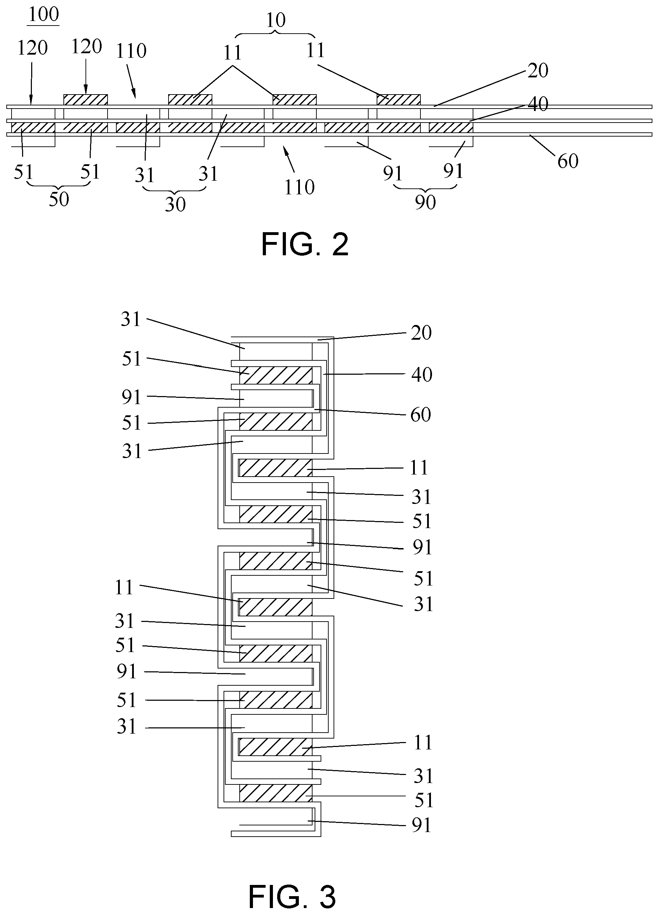

FIGS. 2-3 show a first embodiment of the present invention. In this embodiment, the top electrode units 11 are staggered with the bottom electrode units 91 in the vertical direction, and the number of the bottom electrode units 91 is one more than the number of the top electrode units 11, the top electrode units 11 have positive polarities, and the bottom electrode units 91 have negative polarities. Further, at least one blank region greater than or equal to a length of one electrode unit is formed on the top electrode layer 10 at the head end of the electrode composite unit 100; at least one blank region greater than or equal to a length of one electrode unit is formed on the top electrode layer 10, the first electrode layer 30, the second electrode layer 50 and the bottom electrode layer 90 at the tail end of the electrode composite unit 100, respectively, as shown in FIG. 2. In the case of a respective blank region being formed on the top electrode layer 10, the first electrode layer 30, the second electrode layer 50 and the bottom electrode layer 90 at the tail end of the electrode composite unit 100, respectively, the tail end of the electrode composite unit 100 is formed with a composite separator layer. As shown in FIG. 2, in this embodiment, the folding method on the electrode composite unit 100 includes: starting the folding at the head end (the left end of FIG. 2) of the electrode composite unit 100, firstly folding downward a folding unit 120 at the first column, then folding upward the leftmost folding unit 120 obtained at the previous folding, and then folding downward the leftmost folding unit 120 obtained at the previous folding... until a previous column before the tail end of the electrode composite unit 100 is folded, and finally folding downward the tail end of the electrode composite unit 100 to cover the bottom electrode unit 91 at the previous column.

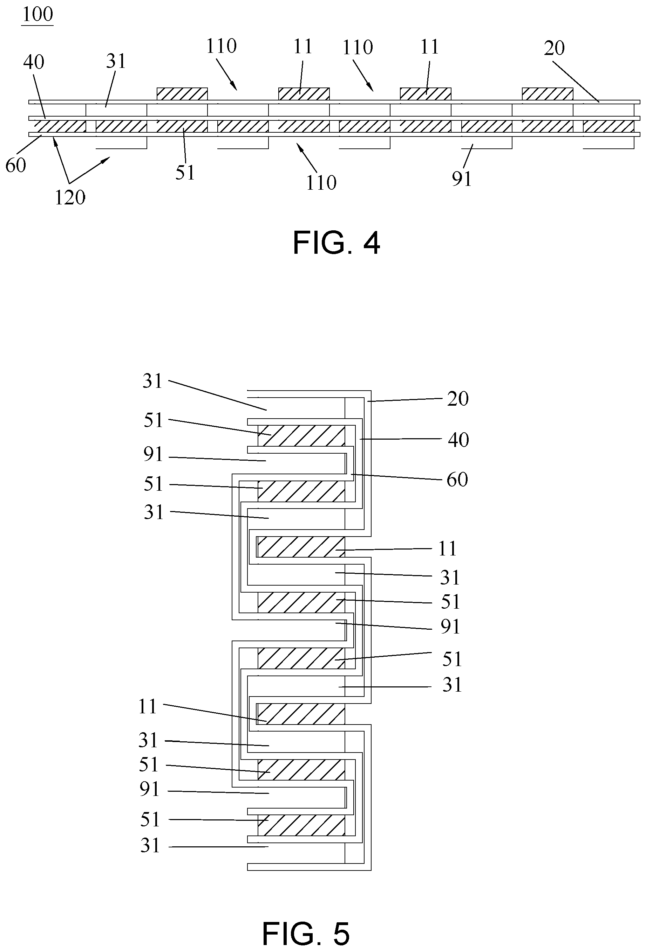

FIGS. 4-5 show a second embodiment of the present invention. In this embodiment, the top electrode units 11 are staggered with the bottom electrode units 91 in the vertical direction, and the number of the bottom electrode units 91 is one more than the number of the top electrode units 11. Further, at least one blank region greater than or equal to a length of one electrode unit is formed on the top electrode layer 10 at the head end of the electrode composite unit 100, at least one blank region greater than or equal to a length of one electrode unit is formed on the top electrode layer 10 at the tail end of the electrode composite unit 100, respectively. As shown in FIG. 4, in this embodiment, the folding method performed on the electrode composite unit 100 includes: starting the folding at the head end (the left end of FIG. 4) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

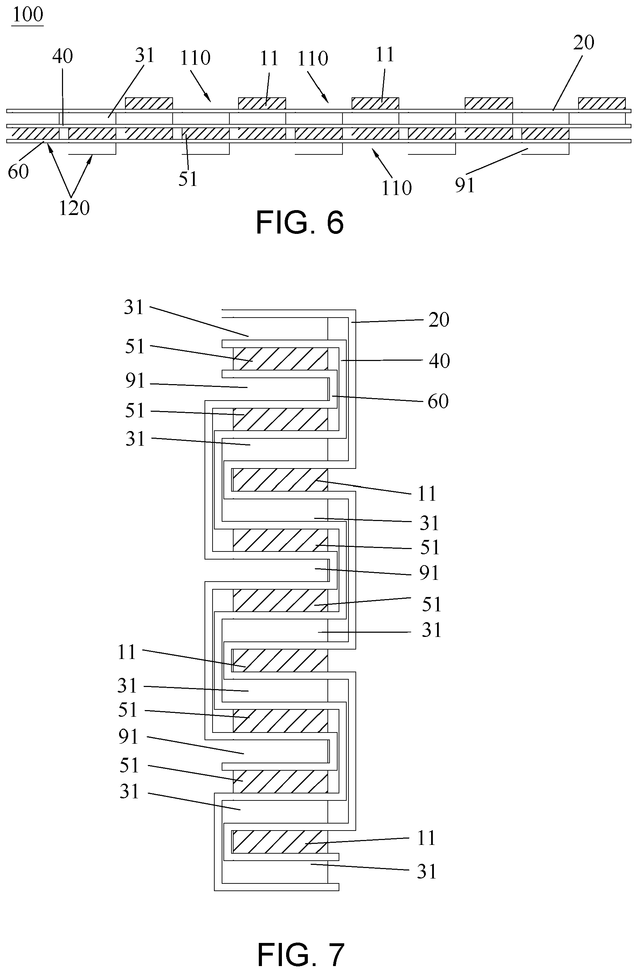

FIGS. 6-7 show a third embodiment of the present invention. In this embodiment, the top electrode units 11 are staggered with the bottom electrode units 91 in the vertical direction, and the number of the bottom electrode units 91 is equal to the number of the top electrode units 11; the top electrode units 11 have positive polarities, and the bottom electrode units 91 have negative polarities. Further, at least one blank region greater than or equal to a length of one electrode unit is formed on the top electrode layer 10 at the head end of the electrode composite unit 100, at least one blank region greater than or equal to a length of one electrode unit is formed on the second electrode layer 50 and the bottom electrode layer 90 at the tail end of the electrode composite unit 100, respectively. As shown in FIG. 6, in this embodiment, the folding method performed on the electrode composite unit 100 includes: starting the folding at the head end (the left end of FIG. 6) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

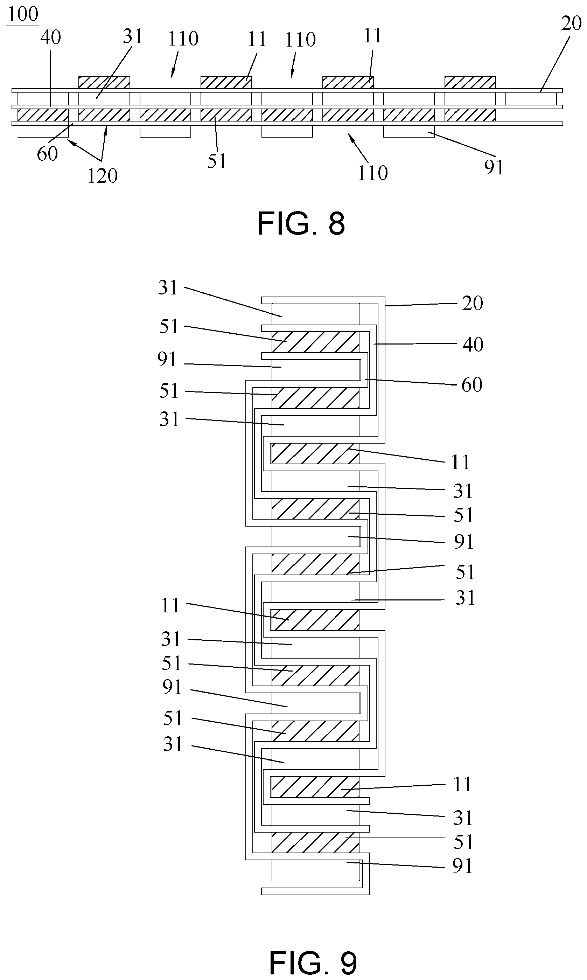

FIGS. 8-9 show a fourth embodiment of the present invention. In this embodiment, the top electrode units 11 are staggered with the bottom electrode units 91 in the vertical direction, and the number of the bottom electrode units 91 is equal to the number of the top electrode units 11. Further, at least one blank region 110 greater than or equal to a length of one electrode unit is formed on the top electrode layer 10 at the head end of the electrode composite unit 100, at least one blank region 110 greater than or equal to a length of one electrode unit is formed on the top electrode layer 10, the second electrode layer 50 and the bottom electrode layer 90 at the tail end of the electrode composite unit 100, respectively. As shown in FIG. 8, in this embodiment, the folding method performed on the electrode composite unit 100 includes: starting the folding at the head end (the left end of FIG. 8) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

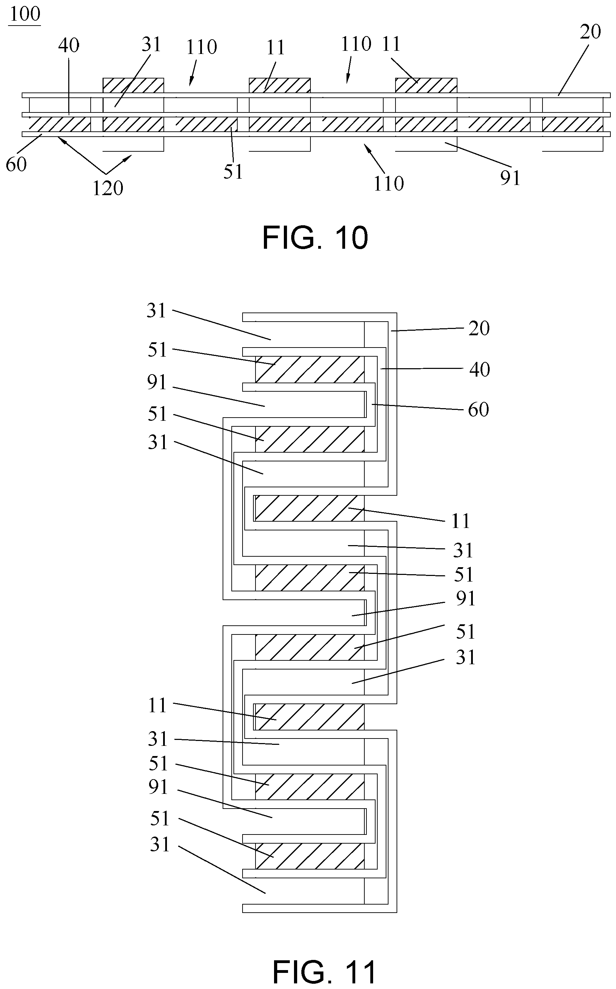

FIGS. 10-11 show a fifth embodiment of the present invention. In this embodiment, the number of the bottom electrode units 91 is one more than the number of the top electrode units 11, each of the top electrode units 11 is aligned with each of the bottom electrode units 91 in the vertical direction; the top electrode units 11 have positive polarities, and the bottom electrode units 91 have negative polarities. Further, at least one blank region 110 greater than or equal to a length of one electrode unit is formed on the top electrode layer 10 and the bottom electrode layer 90 at the head end of the electrode composite unit 100, at least one blank region 110 greater than or equal to a length of one electrode unit is formed on the top electrode layer 10 at the tail end of the electrode composite unit 100. As shown in FIG. 10, in this embodiment, the folding method performed on the electrode composite unit 100 includes: starting the folding at the head end (the left end of FIG. 10) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

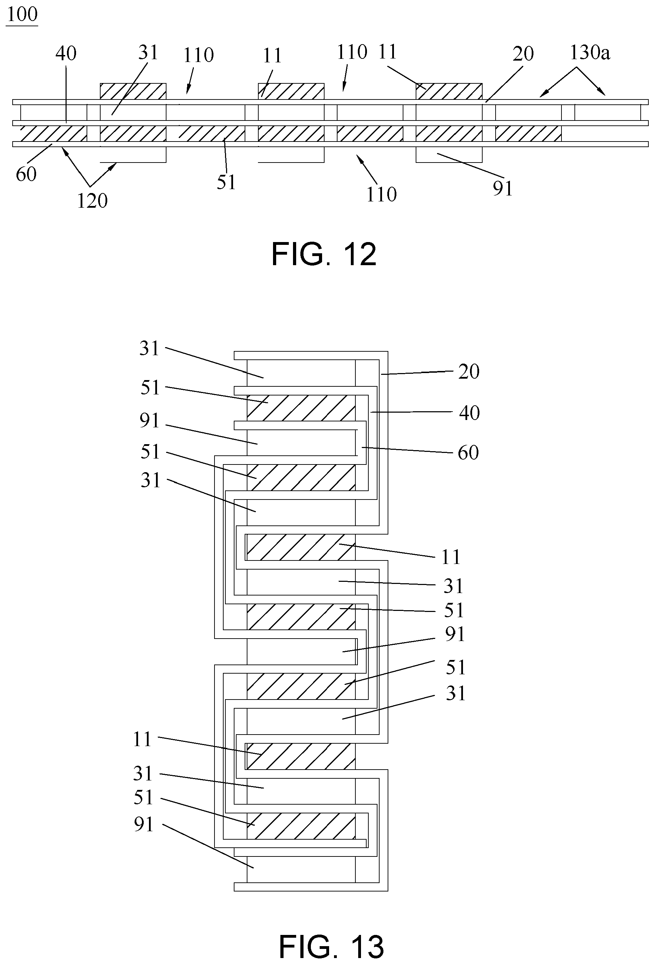

FIGS. 12-13 show a sixth embodiment of the present invention. In this embodiment, the number of the bottom electrode units 91 is equal to the number of the top electrode units 11, each of the top electrode units 11 is aligned with each of the bottom electrode units 91 in the vertical direction; the top electrode units 11 have positive polarities, and the bottom electrode units 91 have negative polarities. Further, at least one blank region 110 greater than or equal to a length of one electrode unit is formed on the top electrode layer 10 and the bottom electrode layer 90 at the head end of the electrode composite unit 100, respectively. An end section 130a is reversed at the tail end of the electrode composite unit 100, and a blank region 110 greater than or equal to a length of one electrode unit is formed on the top electrode layer 10 and the bottom electrode layer 90 at one end of the end section 130a, and a blank region 110 greater than or equal to a length of one electrode unit is formed on the top electrode layer 10, the second electrode layer 50 and the bottom electrode layer 90 at the other end of the end section 130a. As shown in FIG. 12, in this embodiment, the folding method performed on the electrode composite unit 100 includes: starting the folding at the head end (the left end of FIG. 12) of the electrode composite unit 100, firstly folding downward a folding unit 120 at the first column, then folding upward the leftmost folding unit 120 obtained at the previous folding, and then folding downward the leftmost folding unit 120 obtained at the previous folding... until the tail end of the electrode composite unit 100 is folded.

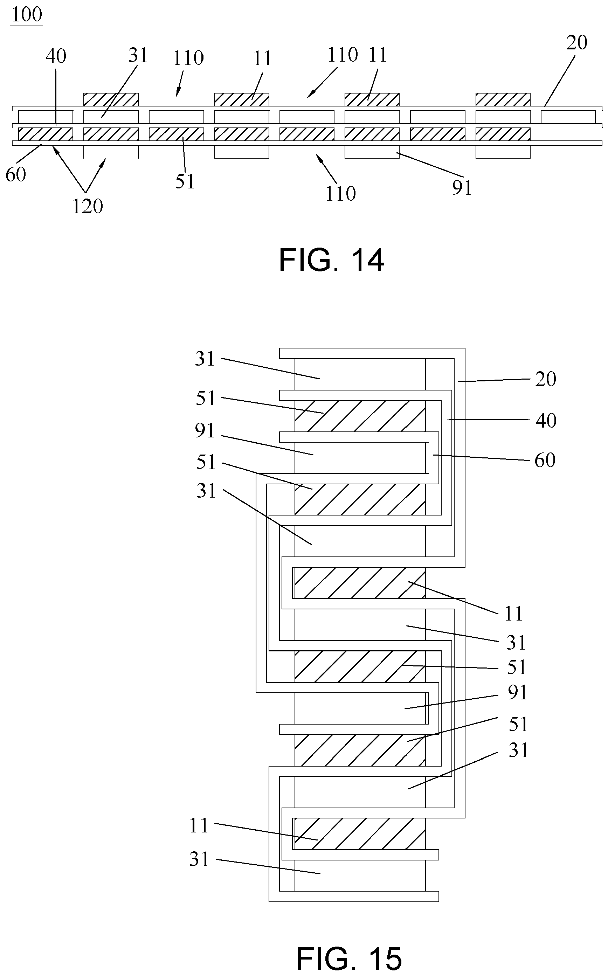

FIGS. 14-15 show a seventh embodiment of the present invention. In this embodiment, the number of the bottom electrode units 91 is one more than the number of the top electrode units 11, each of the top electrode units 11 is aligned with each of the bottom electrode units 91 in the vertical direction. Further, at least one blank region 110 greater than or equal to a length of one electrode unit is formed on the top electrode layer 10 and the bottom electrode layer 90 at the head end of the electrode composite unit 100, at least one blank region 110 greater than or equal to a length of one electrode unit is formed on the top electrode layer 10, the second electrode layer 50 and the bottom electrode layer 90 at the tail end of the electrode composite unit 100, respectively. As shown in FIG. 14, in this embodiment, the folding method performed on the electrode composite unit 100 includes: starting the folding at the head end (the left end of FIG. 14) of the electrode composite unit 100, firstly folding downward a folding unit 120 at the first column, then folding upward the leftmost folding unit 120 obtained at the previous folding, and then folding downward the leftmost folding unit 120 obtained at the previous folding... until the tail end of the electrode composite unit 100 is folded.

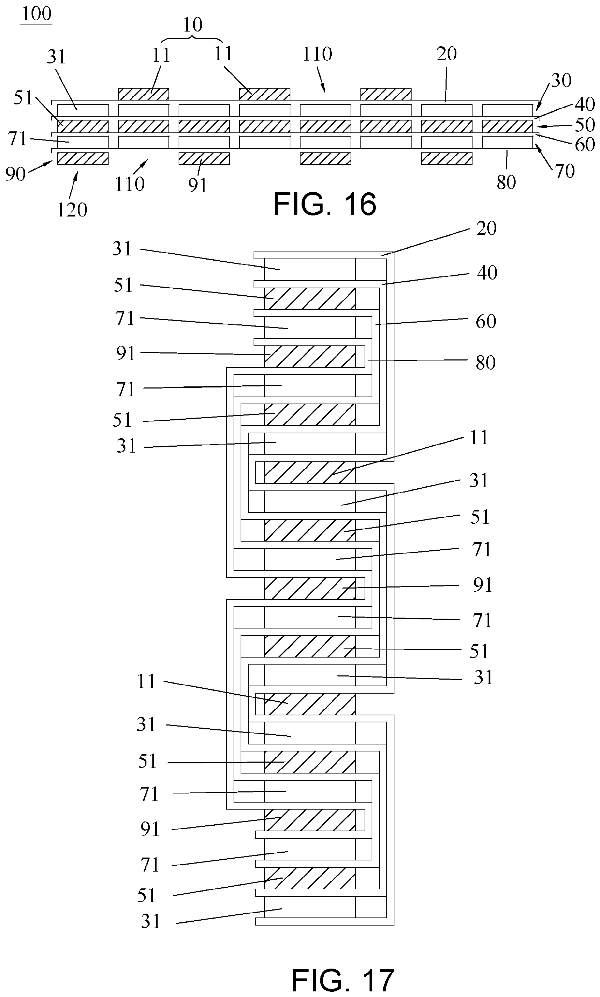

FIGS. 16-31 respectively show an eighth to fifteenth embodiment of the present invention. Specifically, the separator layer includes an even number of layers, the top electrode layer 10 located on the top of the electrode composite unit 100 and the bottom electrode layer 90 located on the bottom of the electrode composite unit 100 have the same polarity. The electrode composite unit includes the top electrode layer 10, a first separator layer 20, a first electrode layer 30, a second separator layer 40, a second electrode layer 50, a third separator layer 60 , a third electrode layer 70, a fourth separator layer 80 and the bottom electrode layer 90, from top to bottom. Specifically, the first electrode layer 30 includes multiple first electrode units 31 spaced apart from each other and arranged in rows, the second electrode layer 50 includes multiple second electrode units 51 spaced apart from each other and arranged in rows, the third electrode layer 70 includes multiple third electrode units 71 spaced apart from each other and arranged in rows, the first electrode units 31, the second electrode units 51 and the third electrode units 71 are aligned with one another in the vertical direction, the top electrode units 11 are aligned with the first electrode units 31, and the bottom electrode units 91 are aligned with the third electrode units 71. In other embodiments, the first electrode layer 30, the second electrode layer 50 and the third electrode layer 70 may be continuous strip-shaped electrodes, which are not limited however.

FIGS. 16-17 show the eighth embodiment of the present invention. In this embodiment, the top electrode units 11 are staggered with the bottom electrode units 91 in the vertical direction, both of the top electrode units 11 and the bottom electrode units 91 have positive polarities, and the number of the bottom electrode units 91 is one more than the number of the top electrode units 11. Further, at least one blank region 110 greater than or equal to a length of one electrode unit is formed on the top electrode layer 10 at the head end of the electrode composite unit 100. As shown in FIG. 16, in this embodiment, the folding method on the electrode composite unit 100 includes: starting the folding at the head end (the left end of FIG. 16) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the last column of the electrode composite unit 100 is folded.

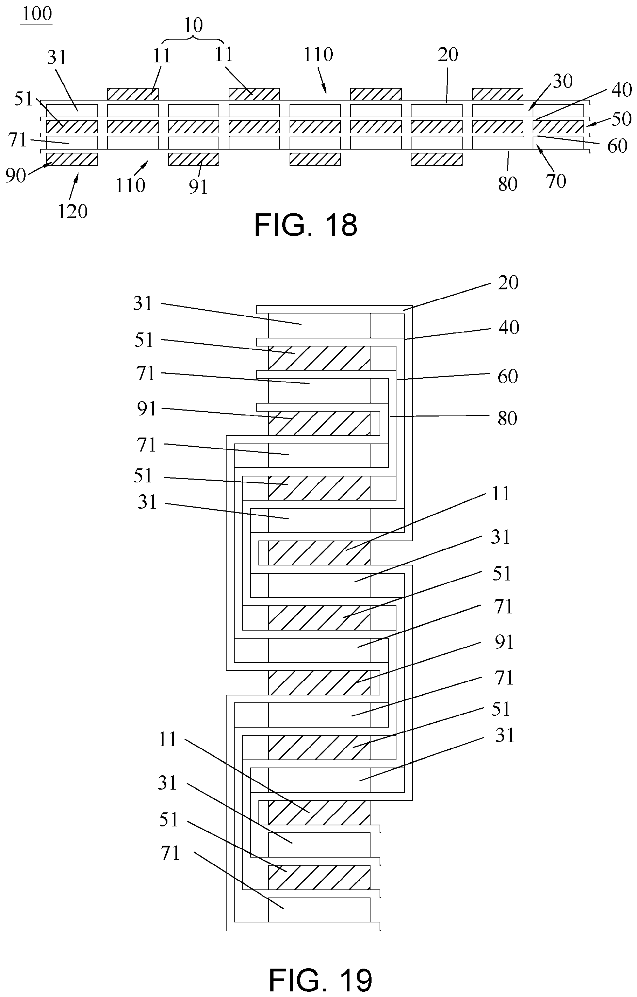

FIGS. 18-19 show a ninth embodiment of the present invention. In this embodiment, the top electrode units 11 are staggered with the bottom electrode units 91 in the vertical direction, and the number of the bottom electrode units 91 is equal to the number of the top electrode units 11. Further, at least one blank region 110 greater than or equal to a length of one electrode unit is formed on the top electrode layer 10 at the head end of the electrode composite unit 100, at least one blank region 110 greater than or equal to a length of one electrode unit is formed on the top electrode layer 10 and the bottom electrode layer 90 at the tail end of the electrode composite unit 100, respectively. As shown in FIG. 18, in this embodiment, the folding method performed on the electrode composite unit 100 includes: starting the folding at the head end (the left end of FIG. 18) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

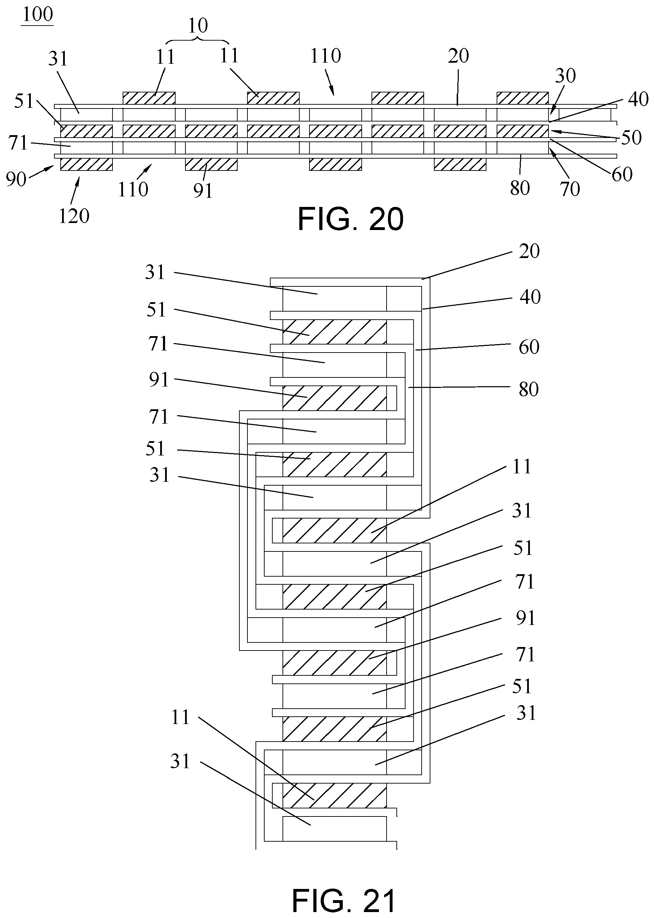

FIGS. 20-21 show a tenth embodiment of the present invention. In this embodiment, the top electrode units 11 are staggered with the bottom electrode units 91 in the vertical direction. At least one blank region 110 greater than or equal to a length of one electrode unit is formed on the top electrode layer 10 at the head end of the electrode composite unit 100, and at least one blank region 110 greater than or equal to a length of one electrode unit is formed on the top electrode layer 10, the second electrode layer 50, the third electrode layer 70 and the bottom electrode layer 90 at the tail end of the electrode composite unit 100, respectively. As shown in FIG. 20, in this embodiment, the folding method performed on the electrode composite unit 100 includes: starting the folding at the head end (the left end of FIG. 20) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

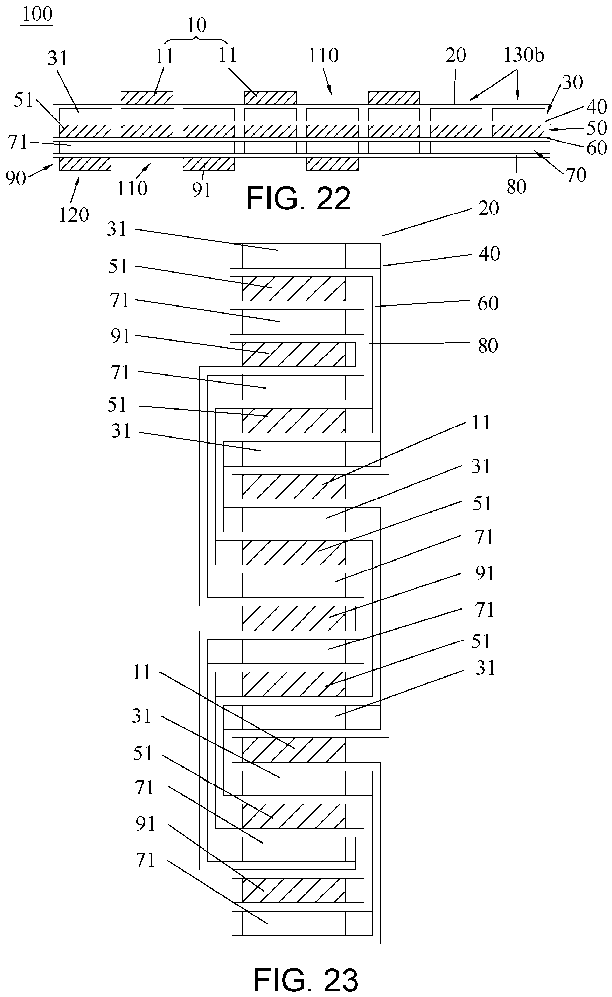

FIGS. 22-23 show an eleventh embodiment of the present invention. Specifically, the top electrode units 11 are staggered with the bottom electrode units 91 in the vertical direction. Further, at least one blank region 110 greater than or equal to a length of one electrode unit is formed on the top electrode layer 10 at the head end of the electrode composite unit 100. An end section 130a is reversed at the tail end of the electrode composite unit 100, and a blank region 110 greater than or equal to a length of one electrode unit is formed on the top electrode layer 10 and the bottom electrode layer 90 at one end of the end section 130a, and a blank region 110 greater than or equal to a length of one electrode unit is formed on the top electrode layer 10, the third electrode layer 70 and the bottom electrode layer 90 at the other end of the end section 130a. As shown in FIG. 22, in this embodiment, the folding method performed on the electrode composite unit 100 includes: starting the folding at the head end (the left end of FIG. 22) of the electrode composite unit 100, firstly folding downward a folding unit 120 at the first column, then folding upward the leftmost folding unit 120 obtained at the previous folding, and then folding downward the leftmost folding unit 120 obtained at the previous folding... until the end section 130b of the electrode composite unit 100 is folded.

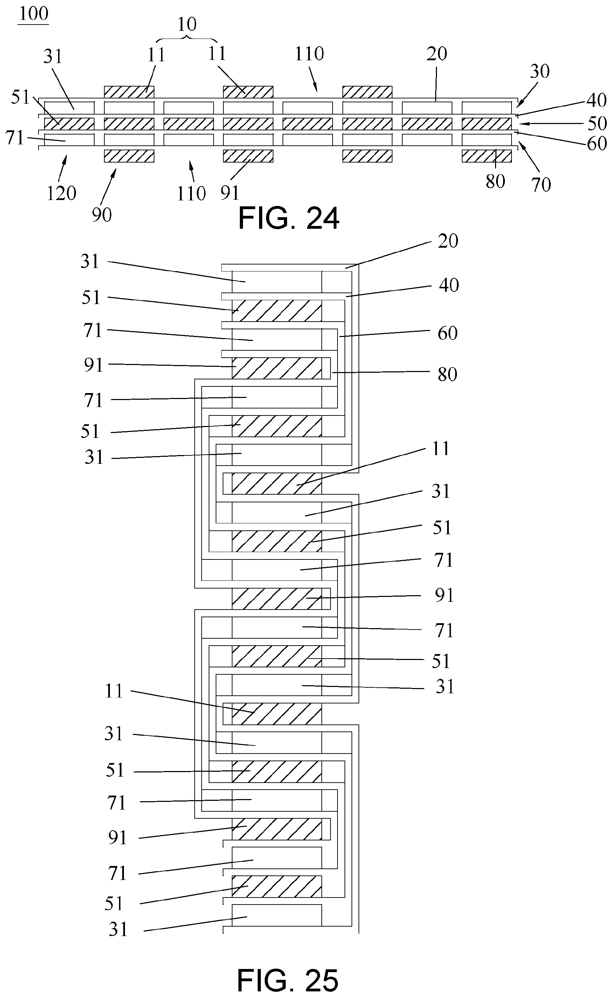

FIGS. 24-25 show a twelfth embodiment of the present invention. In this embodiment, the number of the bottom electrode units 91 is one more than the number of the top electrode units 11, and each of the top electrode units 11 is respectively aligned with one of the bottom electrode units 91 in the vertical direction. Both of the top electrode units 11 and the bottom electrode units 91 have positive polarities. Further, at least one blank region 110 greater than or equal to a length of one electrode unit is formed on the top electrode layer 10 and the bottom electrode layer 90 at the head end of the electrode composite unit 100, respectively, and at least one blank region 110 greater than or equal to a length of one electrode unit is formed on the top electrode layer 10 at the tail end of the electrode composite unit 100. As shown in FIG. 24, in this embodiment, the folding method performed on the electrode composite unit 100 includes: starting the folding at the head end (the left end of FIG. 24) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

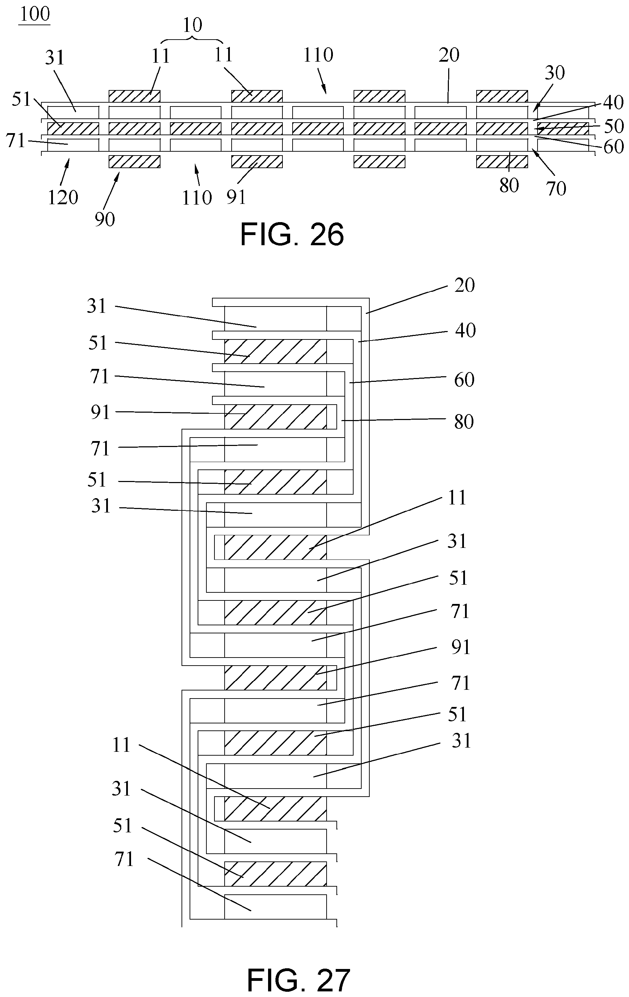

FIGS. 26-27 show a thirteenth embodiment of the present invention. In this embodiment, the number of the top electrode units 11 is equal to the number of the bottom electrode units 91, and each of the top electrode units 11 is respectively aligned with one of the bottom electrode units 91 in the vertical direction. Both of the top electrode units 11 and the bottom electrode units 91 have positive polarities. Further, at least one blank region 110 greater than or equal to a length of one electrode unit is formed on the top electrode layer 10 and the bottom electrode layer 90 at the head end of the electrode composite unit 100, respectively, and at least one blank region 110 greater than or equal to a length of one electrode unit is formed on the top electrode layer 10 and the bottom electrode layer 90 at the tail end of the electrode composite unit 100, respectively. As shown in FIG. 26, in this embodiment, the folding method performed on the electrode composite unit 100 includes: starting the folding at the head end (the left end of FIG. 26) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

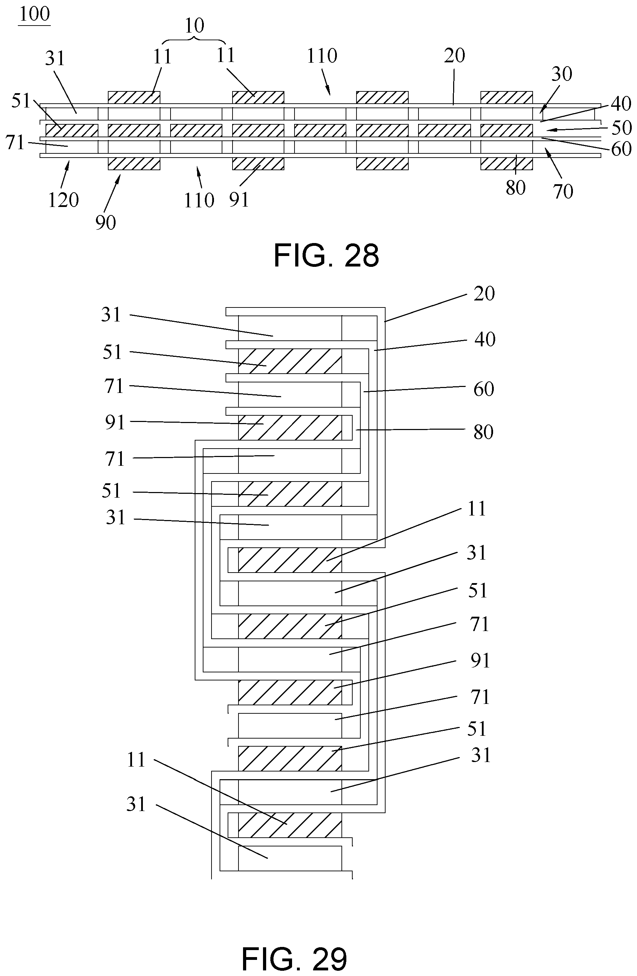

FIGS. 28-29 show a fourteenth embodiment of the present invention. In this embodiment, the number of the top electrode units 11 is equal to the number of the bottom electrode units 91, and each of the top electrode units 11 is respectively aligned with one of the bottom electrode units 91 in the vertical direction. Further, at least one blank region 110 greater than or equal to a length of one electrode unit is formed on the top electrode layer 10 and the bottom electrode layer 90 at the head end of the electrode composite unit 100, respectively, and at least one blank region 110 greater than or equal to a length of one electrode unit is formed on the top electrode layer 10, the second electrode layer 50, the third electrode layer 70 and the bottom electrode layer 90 at the tail end of the electrode composite unit 100, respectively. As shown in FIG. 28, in this embodiment, the folding method performed on the electrode composite unit 100 includes: starting the folding at the head end (the left end of FIG. 28) of the electrode composite unit 100, firstly folding downward a folding unit 120 at the first column, then folding upward the leftmost folding unit 120 obtained at the previous folding, and then folding downward the leftmost folding unit 120 obtained at the previous folding...until the tail end of the electrode composite unit 100 is folded.

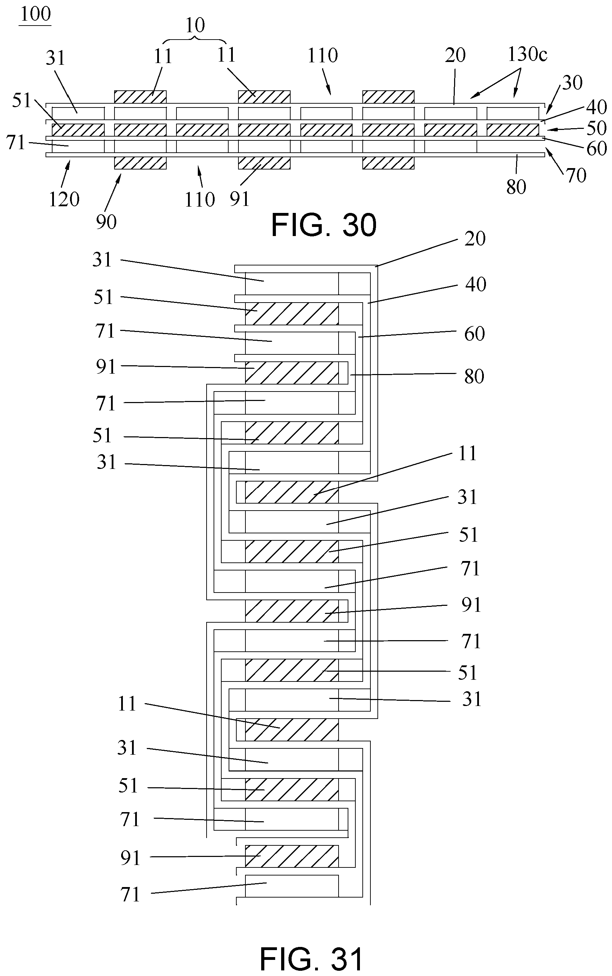

FIGS. 30-31 show a fifteenth embodiment of the present invention. Specifically, the number of the top electrode units 11 is equal to the number of the bottom electrode units 91, and each of the top electrode units 11 is respectively aligned with one of the bottom electrode units 91 in the vertical direction. Further, at least one blank region 110 greater than or equal to a length of one electrode unit is formed on the top electrode layer 10 and the bottom electrode layer 90 at the head end of the electrode composite unit 100, respectively. An end section 130a is reversed at the tail end of the electrode composite unit 100, and a blank region 110 greater than or equal to a length of one electrode unit is formed on the top electrode layer 10 and the bottom electrode layer 90 at one end of the end section 130a, respectively; and a blank region 110 greater than or equal to a length of one electrode unit is formed on the top electrode layer 10, the third electrode layer 70 and the bottom electrode layer 90 at the other end of the end section 130a, respectively. As shown in FIG. 30, in this embodiment, the folding method performed on the electrode composite unit 100 includes: starting the folding at the head end (the left end of FIG. 30) of the electrode composite unit 100, firstly folding downward a folding unit 120 at the first column, then folding upward the leftmost folding unit 120 obtained at the previous folding, and then folding downward the leftmost folding unit 120 obtained at the previous folding ... until the end section 130b of the electrode composite unit 100 is folded.

In the various embodiments provided above, it is worth noting that, the two separator layers are directly hot pressed together, if no electrode unit is formed therebetween.

In comparison with the prior art, the method for manufacturing folding electric core of electrode composite unit includes step a, providing a strip-shaped electrode composite unit 100, the electrode composite unit 100 including multiple electrode layers, a separator layer being provided between two adjacent electrode layers having opposite polarities, a top electrode layer 10 including multiple top electrode units 11 arranged in a row, a bottom electrode layer 90 including multiple bottom electrode units 91 arranged in a row, a blank region 110 greater than or equal to a length of one electrode unit being formed between two adjacent top electrode units 11, a blank region 110 greater than or equal to a length of one electrode unit being formed between two adjacent bottom electrode units 91, and a blank region 110 greater than or equal to a length of one electrode unit being formed on at least the top electrode layer and the bottom electrode layer at a head end and/or a tail end of the electrode composite unit 100; and step b, folding the head end of the electrode composite unit 100 up and down alternatively, with the length of one electrode unit as a unit of folding each time, to form an electric core of battery; in the electric core of battery, two adjacent electrode units having opposite polarities, the electrode units at a top and a bottom of the electric core of battery being both negative electrodes and covered by the separator layer. In such a method, the separator layer of the present invention is prevented from being cut into several separator pieces, thereby simplifying the production process. At the same time, the end of the electrode composite unit 100 is folded up and down alternatively, with the length of one electrode unit 120 as a unit of folding each time, to form an electric core of battery, thus avoiding the traditional stacking of the separator layer, the negative electrode layer and the positive electrode layer in a certain order, thereby improving the production efficiency of the battery cell.

## Claims

1. A method for manufacturing folding electric core of an electrode composite
unit, comprising steps of:
a, providing a strip-shaped electrode composite unit (100), the electrode composite unit (100) comprising multiple electrode layers, a separator layer being provided between two adjacent electrode layers having opposite polarities, a top electrode layer (10) located on a top of the electrode composite unit (100) comprising multiple top electrode units (11) arranged in a row, a bottom electrode layer (90) located on a bottom of the electrode composite unit (100) comprising multiple bottom electrode units (91) arranged in a row, a blank region (110) greater than or equal to a length of one electrode unit being formed between two adjacent top electrode units, a blank region (110) greater than or equal to a length of one electrode unit being formed between two adjacent bottom electrode units, and a blank region (110) greater than or equal to a length of one electrode unit being formed on at least the top electrode layer and the bottom electrode layer at a head end and/or a tail end of the electrode composite unit (100); and
b, folding the head end of the electrode composite unit (100) up and down alternatively, with the length of one electrode unit (120) as a unit of folding each time, to form an electric core of battery; in the electric core of battery, two adjacent electrode units having opposite polarities, the electrode units at a top and a bottom of the electric core of battery being both negative electrodes and covered by the separator layer;
**characterized in that**, the number of the separator layers is odd, the top electrode layer (10) located on the top of the electrode composite unit (100) and the bottom electrode layer (90) located on the bottom of the electrode composite unit (100) have opposite polarities;
the electrode composite unit (100) comprises the top electrode layer (10), a first separator layer (20), a first electrode layer (30), a second separator layer (40), a second electrode layer (50), a third separator layer (60) and the bottom electrode layer (90), from top to bottom;
the first electrode layer (30) comprises multiple first electrode units (31) spaced apart from each other and arranged in rows, the second electrode layer (50) comprises multiple second electrode units (51) spaced apart from each other and arranged in rows, the first electrode units (31) are aligned with the second electrode units (51) in a vertical direction, the top electrode units (11) are aligned with the first electrode units (31), and the bottom electrode units (91) are aligned with the second electrode units (51).

2. The method for manufacturing folding electric core of electrode composite unit according to claim 1, wherein both of the first electrode layer (30) and the second electrode layer (40) are continuous strip-shaped electrodes.

3. The method for manufacturing folding electric core of electrode composite unit according to claim 1 or 2, wherein the top electrode units (11) are staggered with the bottom electrode units (91) in the vertical direction, and the number of the bottom electrode units (91) is one more than the number of the top electrode units (11), the top electrode units (11) have positive polarities, and the bottom electrode units (91) have negative polarities.

4. The method for manufacturing folding electric core of electrode composite unit according to claim 1 or 2, wherein the top electrode units (11) are staggered with the bottom electrode units (91) in the vertical direction, and the number of the bottom electrode units (91) is equal to the number of the top electrode units (11), the top electrode units (11) have positive polarities, and the bottom electrode units (91) have negative polarities.

5. The method for manufacturing folding electric core of electrode composite unit according to claim 1 or 2, wherein the number of the bottom electrode units (91) is one more than the number of the top electrode units (11), each of the top electrode units (11) is aligned with one of the bottom electrode units (91) in the vertical direction, the top electrode units (11) have positive polarities, and the bottom electrode units (91) have negative polarities.

6. The method for manufacturing folding electric core of electrode composite unit according to claim 1 or 2, wherein the number of the bottom electrode units (91) is equal to the number of the top electrode units (11), the top electrode units (11) are aligned with the bottom electrode units (91) in the vertical direction, the top electrode units (11) have positive polarities, and the bottom electrode units (91) have negative polarities.

## Patentansprüche

1. Verfahren zur Herstellung eines faltbaren elektrischen Kerns einer Elektroden-Verbundanordnung, umfassend die Schritte:
a. Bereitstellen einer bandförmigen Elektroden-Verbundanordnung (100), wobei die Elektroden-Verbundanordnung (100) mehrere Elektrodenlagen umfasst, wobei zwischen zwei benachbarten Elektrodenlagen mit entgegengesetzten Polaritäten eine Separatorlage vorgesehen ist, wobei eine obere Elektrodenlage (10), die sich an der Oberseite der Elektroden-Verbundanordnung (100) befindet, mehrere obere Elektrodeneinhheiten (11) umfasst, die in einer Reihe angeordnet sind, wobei eine untere Elektrodenlage (90), die sich an der Unterseite der Elektroden-Verbundanordnung (100) befindet, mehrere untere Elektrodeneinhheiten (91) umfasst, die in einer Reihe angeordnet sind, wobei ein Freiraumbereich (110), der größer oder gleich der Länge einer Elektrodeneinhheit ist, zwischen zwei benachbarten oberen Elektrodeneinhheiten ausgebildet ist, wobei ein Freiraumbereich (110), der größer oder gleich der Länge einer Elektrodeneinhheit ist, zwischen zwei benachbarten unteren Elektrodeneinhheiten ausgebildet ist, und wobei ein Freiraumbereich (110), der größer oder gleich der Länge einer Elektrodeneinhheit ist, an zumindest der oberen Elektrodenlage und der unteren Elektrodenlage an einem Kopfende und/oder einem Endabschnitt der Elektroden-Verbundanordnung (100) ausgebildet ist; und
b. Falten des Kopfendes der Elektroden-Verbundanordnung (100) abwechselnd nach oben und unten, wobei die Länge einer Elektrodeneinhheit (120) jeweils die Faltlänge ist, um einen elektrischen Kern einer Batterie zu bilden; im elektrischen Kern der Batterie weisen zwei benachbarte Elektrodeneinhheiten entgegengesetzte Polaritäten auf, wobei die Elektrodeneinhheiten an der Ober- und Unterseite des elektrischen Kerns der Batterie beide negative Elektroden sind und durch die Separatorlage abgedeckt sind;
**dadurch gekennzeichnet, dass** die Anzahl der Separatorlagen ungerade ist, wobei die obere Elektrodenlage (10), die sich an der Oberseite der Elektroden-Verbundanordnung (100) befindet, und die untere Elektrodenlage (90), die sich an der Unterseite der Elektroden-Verbundanordnung (100) befindet, entgegengesetzte Polaritäten aufweisen;
die Elektroden-Verbundanordnung (100) umfasst - von oben nach unten - die obere Elektrodenlage (10), eine erste Separatorlage (20), eine erste Elektrodenlage (30), eine zweite Separatorlage (40), eine zweite Elektrodenlage (50), eine dritte Separatorlage (60) und die untere Elektrodenlage (90);
die erste Elektrodenlage (30) umfasst mehrere erste Elektrodeneinhheiten (31), die voneinander beabstandet und in Reihen angeordnet sind, die zweite Elektrodenlage (50) umfasst mehrere zweite Elektrodeneinhheiten (51), die voneinander beabstandet und in Reihen angeordnet sind, wobei die ersten Elektrodeneinhheiten (31) in vertikaler Richtung mit den zweiten Elektrodeneinhheiten (51) fluchten, die oberen Elektrodeneinhheiten (11) mit den ersten Elektrodeneinhheiten (31) fluchten, und die unteren Elektrodeneinhheiten (91) mit den zweiten Elektrodeneinhheiten (51) fluchten.

2. Verfahren zur Herstellung eines faltbaren elektrischen Kerns einer Elektroden-Verbundanordnung gemäß Anspruch 1, wobei sowohl die erste Elektrodenlage (30) als auch die zweite Elektrodenlage (40) bandförmige kontinuierliche Elektroden sind.

3. Verfahren zur Herstellung eines faltbaren elektrischen Kerns einer Elektroden-Verbundanordnung gemäß Anspruch 1 oder 2, wobei die oberen Elektrodeneinhheiten (11) in vertikaler Richtung versetzt zu den unteren Elektrodeneinhheiten (91) angeordnet sind, und wobei die Anzahl der unteren Elektrodeneinhheiten (91) um eins größer ist als die Anzahl der oberen Elektrodeneinhheiten (11), die oberen Elektrodeneinhheiten (11) positive Polaritäten aufweisen und die unteren Elektrodeneinhheiten (91) negative Polaritäten aufweisen.

4. Verfahren zur Herstellung eines faltbaren elektrischen Kerns einer Elektroden-Verbundanordnung gemäß Anspruch 1 oder 2, wobei die oberen Elektrodeneinhheiten (11) in vertikaler Richtung versetzt zu den unteren Elektrodeneinhheiten (91) angeordnet sind, und wobei die Anzahl der unteren Elektrodeneinhheiten (91) gleich der Anzahl der oberen Elektrodeneinhheiten (11) ist, die oberen Elektrodeneinhheiten (11) positive Polaritäten aufweisen und die unteren Elektrodeneinhheiten (91) negative Polaritäten aufweisen.

5. Verfahren zur Herstellung eines faltbaren elektrischen Kerns einer Elektroden-Verbundanordnung gemäß Anspruch 1 oder 2, wobei die Anzahl der unteren Elektrodeneinhheiten (91) um eins größer ist als die Anzahl der oberen Elektrodeneinhheiten (11), wobei jede der oberen Elektrodeneinhheiten (11) in vertikaler Richtung mit einer der unteren Elektrodeneinhheiten (91) fluchtet, wobei die oberen Elektrodeneinhheiten (11) positive Polaritäten aufweisen und die unteren Elektrodeneinhheiten (91) negative Polaritäten aufweisen.

6. Verfahren zur Herstellung eines faltbaren elektrischen Kerns einer Elektroden-Verbundanordnung gemäß Anspruch 1 oder 2, wobei die Anzahl der unteren Elektrodeneinhheiten (91) gleich der Anzahl der oberen Elektrodeneinhheiten (11) ist, wobei die oberen Elektrodeneinhheiten (11) in vertikaler Richtung mit den unteren Elektrodeneinhheiten (91) fluchten, wobei die oberen Elektrodeneinhheiten (11) positive Polaritäten aufweisen und die unteren Elektrodeneinhheiten (91) negative Polaritäten aufweisen.

## Revendications

1. Procédé de fabrication d'un noyau électrique pliable d'une unité composite d'électrodes, comprenant les étapes suivantes :
a. Fourniture d'une unité composite d'électrodes (100) en forme de bande, l'unité composite d'électrodes (100) comprenant plusieurs couches d'électrodes, une couche séparatrice étant disposée entre deux couches d'électrodes adjacentes ayant des polarités opposées, une couche d'électrode supérieure (10) située sur le dessus de l'unité composite d'électrodes (100) comprenant plusieurs unités d'électrodes supérieures (11) disposées en ligne, une couche d'électrode inférieure (90) située en dessous de l'unité composite d'électrodes (100) comprenant plusieurs unités d'électrodes inférieures (91) disposées en ligne, une zone vierge (110) supérieure ou égale à la longueur d'une unité d'électrode étant formée entre deux unités d'électrodes supérieures adjacentes, une zone vierge (110) supérieure ou égale à la longueur d'une unité d'électrode étant formée entre deux unités d'électrodes inférieures adjacentes, et une zone vierge (110) supérieure ou égale à la longueur d'une unité d'électrode étant formée au moins sur la couche d'électrode supérieure et la couche d'électrode inférieure à une extrémité avant et/ou à une extrémité arrière de l'unité composite d'électrodes (100) ; et
b. Pliage de l'extrémité avant de l'unité composite d'électrodes (100) alternativement vers le haut et vers le bas, en utilisant la longueur d'une unité d'électrode (120) comme unité de pliage à chaque fois, pour former un noyau électrique de batterie ; dans le noyau électrique de la batterie, deux unités d'électrodes adjacentes présentent des polarités opposées, les unités d'électrodes situées en haut et en bas du noyau électrique de la batterie étant toutes deux des électrodes négatives et recouvertes par la couche séparatrice ;
**caractérisé en ce que** le nombre de couches séparatrices est impair, la couche d'électrode supérieure (10) située au-dessus de l'unité composite d'électrodes (100) et la couche d'électrode inférieure (90) située en dessous de l'unité composite d'électrodes (100) ayant des polarités opposées ;
l'unité composite d'électrodes (100) comprend, de haut en bas : la couche d'électrode supérieure (10), une première couche séparatrice (20), une première couche d'électrode (30), une deuxième couche séparatrice (40), une deuxième couche d'électrode (50), une troisième couche séparatrice (60) et la couche d'électrode inférieure (90) ;
la première couche d'électrode (30) comprend plusieurs premières unités d'électrodes (31) espacées les unes des autres et disposées en ligne, la deuxième couche d'électrode (50) comprend plusieurs deuxièmes unités d'électrodes (51) espacées les unes des autres et disposées en ligne, les premières unités d'électrodes (31) étant alignées avec les deuxièmes unités d'électrodes (51) dans la direction verticale, les unités d'électrodes supérieures (11) étant alignées avec les premières unités d'électrodes (31), et les unités d'électrodes inférieures (91) étant alignées avec les deuxièmes unités d'électrodes (51).

2. Procédé de fabrication d'un noyau électrique pliable d'une unité composite d'électrodes selon la revendication 1, dans lequel la première couche d'électrode (30) et la deuxième couche d'électrode (40) sont toutes deux des électrodes continues en forme de bande.

3. Procédé de fabrication d'un noyau électrique pliable d'une unité composite d'électrodes selon la revendication 1 ou 2, dans lequel les unités d'électrodes supérieures (11) sont disposées en quinconce par rapport aux unités d'électrodes inférieures (91) dans la direction verticale, et dans lequel le nombre d'unités d'électrodes inférieures (91) est supérieur d'une unité à celui des unités d'électrodes supérieures (11), les unités d'électrodes supérieures (11) ayant une polarité positive, et les unités d'électrodes inférieures (91) ayant une polarité négative.

4. Procédé de fabrication d'un noyau électrique pliable d'une unité composite d'électrodes selon la revendication 1 ou 2, dans lequel les unités d'électrodes supérieures (11) sont disposées en quinconce par rapport aux unités d'électrodes inférieures (91) dans la direction verticale, et dans lequel le nombre d'unités d'électrodes inférieures (91) est égal au nombre d'unités d'électrodes supérieures (11), les unités d'électrodes supérieures (11) ayant une polarité positive, et les unités d'électrodes inférieures (91) ayant une polarité négative.

5. Procédé de fabrication d'un noyau électrique pliable d'une unité composite d'électrodes selon la revendication 1 ou 2, dans lequel le nombre d'unités d'électrodes inférieures (91) est supérieur d'une unité à celui des unités d'électrodes supérieures (11), chaque unité d'électrode supérieure (11) étant alignée dans la direction verticale avec l'une des unités d'électrodes inférieures (91), les unités d'électrodes supérieures (11) ayant une polarité positive, et les unités d'électrodes inférieures (91) ayant une polarité négative.

6. Procédé de fabrication d'un noyau électrique pliable d'une unité composite d'électrodes selon la revendication 1 ou 2, dans lequel le nombre d'unités d'électrodes inférieures (91) est égal au nombre d'unités d'électrodes supérieures (11), les unités d'électrodes supérieures (11) étant alignées dans la direction verticale avec les unités d'électrodes inférieures (91), les unités d'électrodes supérieures (11) ayant une polarité positive, et les unités d'électrodes inférieures (91) ayant une polarité négative.
